# DEMANDE DE BREVET EUROPEEN

(11) **EP 2 367 317 A1**
(43) Date de publication de la demande: **21.09.2011**
(21) Numéro de dépôt: 11305293.0
(22) Date de dépôt: 16.03.2011
(51) Int. Cl.: H04L 9/14, H04N 7/167

(54) **Procédé et système de protection d'un signal d'informations par un mot de contrôle**

(30) Priorité: 17.03.2010 FR 1051896
(71) Demandeur: Logiways France, 75015 Paris (FR)
(72) Inventeur: Benardeau, Christian, 77600, BUSSY SAINT GEORGES (FR)
(74) Mandataire: Domenego, Bertrand

(57) **Abrégé**

Ce procédé de protection d'un signal d'informations par un mot de contrôle, ledit signal d'informations et mot de contrôle étant transmis par un émetteur à destination d'un ou de plusieurs récepteurs (7), l'émetteur mettant en oeuvre une étape de chiffrement du signal d'informations à l'aide du mot de contrôle (CW) et une étape de chiffrement du mot de contrôle (CW) dans un module de contrôle d'accès avant de les transmettre à ou aux récepteurs (7) et le ou chaque récepteur (7) mettant en oeuvre une étape de déchiffrement du mot de contrôle et une étape de déchiffrement des signaux d'informations à l'aide de ce mot de contrôle, est caractérisé en ce que l'émetteur met en oeuvre une étape de chiffrement supplémentaire du mot de contrôle (CW) par un module de contrôle d'accès supplémentaire, et en ce que le récepteur (7) met en oeuvre une étape de déchiffrement supplémentaire du mot de contrôle par un module de sécurité supplémentaire (16).

## Description

La présente invention concerne un procédé et un système de protection d'un signal d'informations par un mot de contrôle.

De tels procédés et de tels systèmes sont mis en oeuvre par exemple dans les contrôles d'accès sécurisés utilisés pour la diffusion de signaux de télévision à péage.

Dans de tels systèmes, les signaux de télévision sont chiffrés au niveau d'une tête de réseau de diffusion par un mot de contrôle (« Control Word », CW, en anglais) issu d'un générateur aléatoire. Ce mot de contrôle est alors entré dans des moyens de chiffrement des signaux de télévision avant que ceux-ci ne soient transmis par la tête de réseau à destination de récepteurs correspondants.

Le mot de contrôle est également transmis à des moyens de contrôle d'accès qui sont utilisés pour chiffrer ce mot de contrôle et le transmettre à destination des récepteurs correspondants dans un message dit ECM pour « Entitlement Control Message ».

Dans l'état de la technique, ces différents signaux sont alors transmis à destination des récepteurs correspondants qui sont équipés de moyens permettant, d'une part, de récupérer les signaux de télévision et, d'autre part, les messages ECM.

Les messages ECM sont alors déchiffrés à l'aide d'un module de sécurité qui peut par exemple se présenter sous la forme d'une carte à puce insérée dans un décodeur correspondant, pour récupérer le mot de contrôle. Ce mot de contrôle est ensuite entré dans des moyens de déchiffrement des signaux de télévision reçus par le récepteur afin de délivrer en clair les signaux de télévision.

On sait cependant que ces mécanismes sont soumis à un piratage intensif.

En particulier, un piratage très répandu consiste à récupérer le mot de contrôle en sortie du module de sécurité et à le diffuser largement à travers par exemple Internet.

Ce mot de contrôle est en effet relativement facile à détecter en plaçant une sonde à l'interface entre le module de sécurité et le reste du récepteur.

Différentes tentatives ont déjà été faites pour tenter de résoudre ce problème.

En particulier, on a utilisé des techniques d'appariement (« Pairing » en anglais) du module de sécurité et du reste du récepteur.

Ces techniques d'appariement consistent à chiffrer le mot de contrôle entre le module de sécurité et le reste du récepteur à l'aide d'une clé par exemple partagée et commune entre la carte à puce et le récepteur.

Par ailleurs, cette technique de protection ne peut pas être mise en oeuvre pour les récepteurs d'ancienne génération.

Le but de l'invention est donc de résoudre ce problème.

A cet effet, l'invention a pour objet un procédé de protection d'un signal d'informations par un mot de contrôle, ledit signal d'informations et mot de contrôle étant transmis par un émetteur à destination d'un ou de plusieurs récepteurs, l'émetteur mettant en oeuvre une étape de chiffrement du signal d'informations à l'aide du mot de contrôle (CW) et une étape de chiffrement du mot de contrôle (CW) dans un module de contrôle d'accès avant de les transmettre à ou aux récepteurs et le ou chaque récepteur mettant en oeuvre une étape de déchiffrement du mot de contrôle et une étape de déchiffrement des signaux d'informations à l'aide de ce mot de contrôle, caractérisé en ce que l'émetteur met en oeuvre une étape de chiffrement supplémentaire du mot de contrôle (CW) par un module de contrôle d'accès supplémentaire, et en ce que le récepteur met en oeuvre une étape de déchiffrement supplémentaire du mot de contrôle par un module de sécurité supplémentaire.

L'invention concerne également un système de protection d'un signal d'informations par un mot de contrôle, ledit signal d'informations et mot de contrôle étant transmis par un émetteur à destination d'un ou plusieurs récepteurs, l'émetteur comportant des moyens de chiffrement des informations à l'aide d'un mot de contrôle et des moyens de chiffrement du mot de contrôle avant de les transmettre à destination du ou des récepteurs, et le ou chaque récepteur comporte un module de sécurité de déchiffrement du mot de contrôle et des moyens de déchiffrement des informations à l'aide de ce mot de contrôle,caractérisé en ce que l'émetteur comporte des moyens de chiffrement supplémentaire du mot de contrôle en sortie des moyens de chiffrement et en ce que le ou chaque récepteur comporte un module de sécurité supplémentaire de déchiffrement correspondant du mot de contrôle.

Selon d'autres aspects de l'invention, le système de protection d'un signal d'informations comprend l'une ou plusieurs de caractéristiques suivantes :
- le module de sécurité est adapté pour être inséré de façon amovible dans le récepteur tandis que le module de sécurité supplémentaire est intégré dans le récepteur, et
- les signaux d'informations sont des signaux de télévision.

L'invention sera mieux comprise à l'aide de la description qui va suivre donnée uniquement à titre d'exemple et faite en se référant aux dessins annexés, sur lesquels :
- La figure 1 représente un schéma synoptique illustrant un mode de réalisation d'une tête de réseau d'émission de signaux d'informations chiffrés de l'état de la technique,
- la figure 2 représente un schéma synoptique d'un récepteur de tels signaux de l'état de la technique des récepteurs d'ancienne génération, et
- les figures 3 et 4 représentent respectivement des schémas synoptiques d'une tête de réseau et d'un récepteur mettant en oeuvre un procédé et un système selon l'invention.

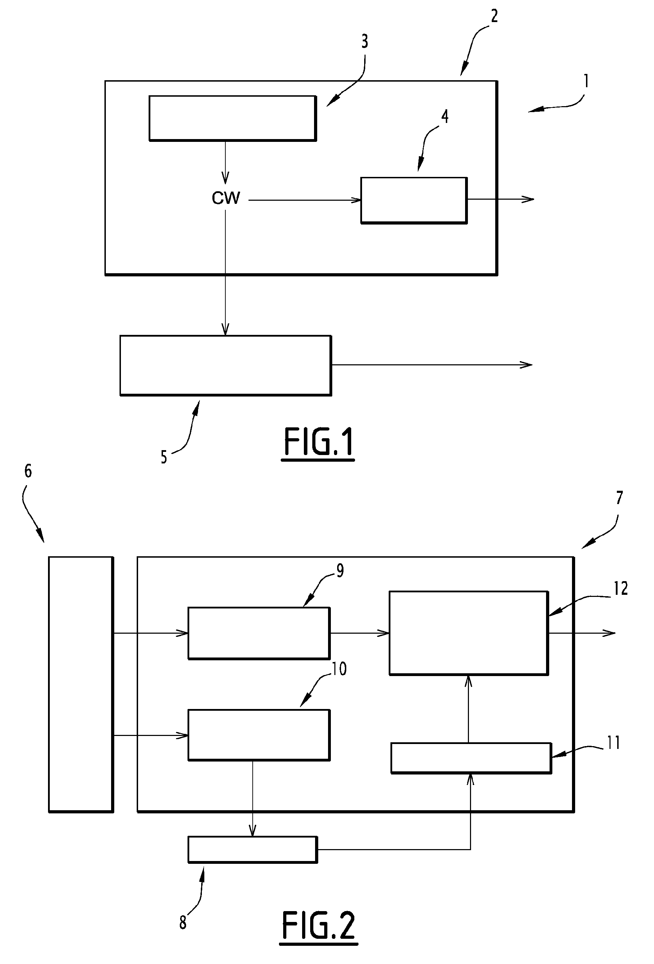

On a en effet illustré sur la figure 1, une tête de réseau de diffusion d'informations notamment de signaux de télévision.

Cette tête de réseau est désignée par la référence générale 1 sur cette figure et comporte par exemple un embrouilleur de signaux désigné par la référence générale 2. Cet embrouilleur utilise un mot de contrôle également appelé « Control Word » ou CW, dans l'état de la technique, issu d'un générateur aléatoire correspondant désigné par la référence générale 3, pour chiffrer à l'aide d'un module de chiffrement audio/vidéo de type par exemple DVB-CSA désigné par la référence générale 4, les signaux de télévision qu'il y a lieu d'émettre.

De plus, le mot de contrôle est entré dans un module de contrôle d'accès désigné par la référence générale 5 pour y être chiffré et est ensuite transporté de façon classique dans un message dit message ECM à destination des récepteurs.

Ces informations sont alors transmises à destination de récepteurs correspondants dont un schéma synoptique est illustré sur la figure 2.

Les informations reçues au niveau de ce récepteur sont désignées par la référence générale 6, le récepteur étant quant à lui désigné par la référence générale 7.

Comme cela sera décrit plus en détail par la suite, ce récepteur est également associé à un module de sécurité désigné par la référence générale 8, se présentant par exemple sous la forme d'une carte à puce ou autre, et mettant en oeuvre au moins en partie des moyens de déchiffrement de données, comme cela sera décrit plus en détail par la suite.

Le récepteur comporte alors deux filtres différents, l'un désigné par la référence générale 9, permettant de récupérer les signaux d'informations par exemple de télévision à déchiffrer et l'autre désigné par la référence générale 10, permettant de récupérer les messages dits ECM.

On rappellera que le mot de contrôle CW chiffré lors de l'émission par la tête de réseau est contenu dans ces messages ECM.

Les messages ECM récupérés sont ensuite transmis au module de sécurité 8 qui permet de récupérer et de déchiffrer dans ceux-ci le mot de contrôle CW. Une fois récupéré, ce mot de contrôle est retransmis au récepteur 7, en clair entre le module de sécurité 8 et un registre d'entrée désigné par la référence générale 11, permettant de délivrer à un module de déchiffrement désigné par la référence générale 12, ce mot de contrôle, afin de déchiffrer les informations telles que par exemple les signaux de télévision.

Comme cela a été indiqué précédemment, le mot de contrôle CW est transmis en clair entre le module de sécurité, c'est-à-dire par exemple entre la carte à puce, et le reste du récepteur.

Or il est très facile de récupérer ce mot de contrôle afin de le diffuser auprès de pirates.

Le but de l'invention est de résoudre ce problème.

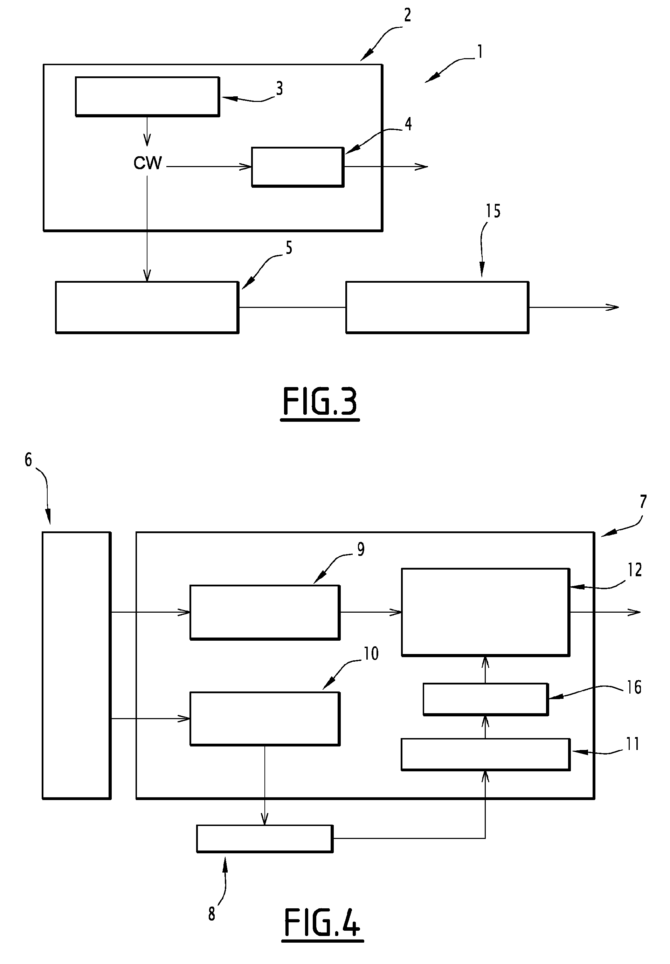

On a illustré sur les figures 3 et 4 respectivement une tête de réseau et un récepteur qui mettent en oeuvre le procédé et le système selon l'invention.

Pour des raisons de simplification, des numéros de référence identiques désignent des organes identiques ou analogues à ceux illustrés respectivement sur les figures 1 et 2.

C'est ainsi que sur la figure 3, on reconnaît la tête de réseau désignée par la référence générale 1, l'embrouilleur de signaux 2, le générateur aléatoire de mot de contrôle 3, le module de chiffrement 4 et le module de contrôle d'accès 5.

Selon l'invention, la sortie de ce module de contrôle d'accès 5 qui chiffre une première fois le mot de contrôle CW, est entrée dans un module de contrôle d'accès supplémentaire désigné par la référence générale 15 sur cette figure, qui applique alors un surchiffrement ou un chiffrement supplémentaire sur le mot de contrôle chiffré par le premier module de contrôle d'accès 5.

La sortie de ce module de contrôle d'accès supplémentaire 15 délivre alors un mot de contrôle chiffré et surchiffré, c'est-à-dire chiffré une première fois par le module de contrôle d'accès 5 et surchiffré par le module de contrôle d'accès 15. De façon classique, cette information est alors transmise dans un message de type ECM à destination des récepteurs correspondants.

Un récepteur mettant en oeuvre le procédé et le système selon l'invention est illustré sur la figure 4, sur laquelle on reconnaît le récepteur 7, les signaux entrants 6, le filtre 9 permettant de récupérer les signaux de télévision chiffrés, le filtre 10 permettant de récupérer les messages ECM, le module de déchiffrement 12, le registre 11 et le module de sécurité 8 constitué toujours par exemple par une carte à puce adaptée pour être insérée dans le récepteur/décodeur de façon amovible.

Le module de sécurité 8 est alors adapté pour récupérer dans les messages ECM, le mot de contrôle diffusé par la tête de réseau, en appliquant une première étape de déchiffrement correspondant au chiffrement mis en oeuvre par le premier module de contrôle d'accès 5 dans cette tête de réseau.

En sortie, le module de sécurité 8 délivre alors au reste du récepteur 7, un mot de contrôle qui reste chiffré conformément au chiffrement mis en oeuvre par le module de contrôle d'accès supplémentaire 15.

On conçoit alors que l'information relative au mot de contrôle qui circule entre le module de sécurité 8 et le reste du récepteur 7 ne présente plus aucun intérêt pour les pirates, dans la mesure où le mot de contrôle reste chiffré.

De façon classique, ce mot de contrôle chiffré est alors délivré au registre 11 qui l'applique à un module de sécurité supplémentaire désigné par la référence générale 16 sur cette figure, qui est lui adapté pour déchiffrer et récupérer le mot de contrôle en clair et le délivrer aux moyens de déchiffrement des signaux de télévision 12.

Ce second module de sécurité réalise alors une étape de déchiffrement supplémentaire du mot de contrôle de façon inverse à l'étape de chiffrement mise en oeuvre par le module de contrôle d'accès supplémentaire 15.

Les informations utiles à ce déchiffrement sont transmises de façon classique, dans les messages ECM.

On notera que, contrairement au premier module de sécurité 8, ce second module de sécurité 16 est intégré dans le récepteur correspondant 7 et est par exemple interposé entre le registre 11 et le module de déchiffrement des signaux 12 directement en amont de celui-ci et que sa sortie n'est donc pas directement accessible aux pirates. II est alors beaucoup plus difficile aux pirates de récupérer ce mot de contrôle afin de le diffuser.

Différents modes d'implantation de ce second module peuvent être envisagés.

On conçoit alors que l'idée à la base de la présente invention consiste à surchiffrer le mot de contrôle contenu dans les messages ECM à l'aide par exemple d'un traitement mathématique aisément implantable dans les composants déjà en place.

Dans la présente description les termes chiffrement et déchiffrement ont été utilisés de façon générale pour désigner toutes les opérations possibles de protection des données concernées et ne doivent pas être compris comme limitant la portée de l'invention au seul cryptage de ces données.

En effet des protections diverses telles que par exemple en utilisant un OUEX peuvent être envisagées.

De même et bien que le module de sécurité ait été décrit comme une carte à puce pouvant être engagée de façon amovible dans le récepteur, d'autres modes de réalisation peuvent être envisagés comme par exemple une réalisation logicielle embarquée de celui-ci.

C'est également le cas pour le module de sécurité supplémentaire qui a été représenté sous la forme d'un bloc fonctionnel mais qui pourrait également être réalisé sous une forme logicielle et embarqué directement dans le récepteur et plus particulièrement dans les moyens de déchiffrement de celui-ci.

Ceci permet alors d'améliorer grandement la sécurité de fonctionnement de ce type de système et de réduire le piratage.

## Revendications

1. Procédé de protection d'un signal d'informations par un mot de contrôle, ledit signal d'informations et mot de contrôle étant transmis par un émetteur (1) à destination d'un ou de plusieurs récepteurs (7), l'émetteur (1) mettant en oeuvre une étape de chiffrement du signal d'informations à l'aide du mot de contrôle (CW) et une étape de chiffrement du mot de contrôle (CW) dans un module de contrôle d'accès (5) avant de les transmettre à ou aux récepteurs (7) et le ou chaque récepteur (7) mettant en oeuvre une étape de déchiffrement du mot de contrôle et une étape de déchiffrement des signaux d'informations à l'aide de ce mot de contrôle, **caractérisé en ce que** l'émetteur (1) met en oeuvre une étape de chiffrement supplémentaire du mot de contrôle (CW) par un module de contrôle d'accès supplémentaire (15), et **en ce que** le récepteur (7) met en oeuvre une étape de déchiffrement supplémentaire du mot de contrôle par un module de sécurité supplémentaire (16).

2. Système de protection d'un signal d'informations par un mot de contrôle, ledit signal d'informations et mot de contrôle étant transmis par un émetteur (1) à destination d'un ou plusieurs récepteurs (7), l'émetteur comportant des moyens de chiffrement (4) des informations à l'aide d'un mot de contrôle (CW) et des moyens de chiffrement (5) du mot de contrôle, avant de les transmettre à destination du ou des récepteurs, et le ou chaque récepteur (7) comporte un module de sécurité (8) de déchiffrement du mot de contrôle et des moyens de déchiffrement (12) des informations à l'aide de ce mot de contrôle,**caractérisé en ce que** l'émetteur (1) comporte des moyens de chiffrement supplémentaire (15) du mot de contrôle en sortie des moyens de chiffrement (5) et **en ce que** le ou chaque récepteur (7) comporte un module de sécurité supplémentaire (15) de déchiffrement correspondant du mot de contrôle.

3. Système de protection selon la revendication 2, **caractérisé en ce que** le module de sécurité (8) est adapté pour être inséré de façon amovible dans le récepteur (7) tandis que le module de sécurité supplémentaire (15) est intégré dans le récepteur.

4. Système de protection selon l'une quelconque des revendications 2 ou 3, **caractérisé en ce que** les signaux d'informations sont des signaux de télévision.
